# EUROPEAN PATENT SPECIFICATION

(11) **EP 4 287 303 B1**
(45) Date of publication and mention of the grant of the patent: **08.04.2026**
(21) Application number: 22887767.6
(22) Date of filing: 01.11.2022
(51) Int. Cl.: H01M 4/134, H01M 4/525, H01M 4/62, H01M 10/052, H01M 4/04, H01M 4/139, H01M 4/38, H01M 4/02

(54) **NEGATIVE ELECTRODE WITH SINGLE WALLED CARBON NANOTUBE AND SECONDARY BATTERY COMPRISING THE SAME**
NEGATIVE ELEKTRODE MIT EINWANDIGEN KOHLENSTOFFNANORÖHREN UND SEKUNDÄRBATTERIE DAMIT
ÉLECTRODE NÉGATIVE À NANOTUBES DE CARBONE SIMPLE PAROI ET BATTERIE SECONDAIRE LA COMPRENANT

(30) Priority: 01.11.2021 KR 20210148229; 31.10.2022 KR 20220142922
(43) Date of publication of application: 06.12.2023
(73) Proprietor: LG Energy Solution, Ltd., Seoul 07335 (KR)
(72) Inventor: KANNAN, Aravindaraj Govindaraj, Daejeon 34122 (KR); LEE, Kwan Soo, Daejeon 34122 (KR); CHOI, Eun Sun, Daejeon 34122 (KR); SHIM, Gayoung, Daejeon 34122 (KR)
(74) Representative: Hoffmann Eitle
(86) International application number: PCT/KR2022/016940
(87) International publication number: WO 2023/075573

(56) References cited:
- JP-A- 2007 066 745
- JP-A- 2018 101 623
- KR-A- 20090 078 656
- KR-A- 20170 047 095
- KR-A- 20200 027 787
- KR-A- 20210 038 364
- ZHANG M ET AL: "Carbon Nanotube in different shapes", MATERIALS TODAY, vol. 12, no. 6, 27 June 2009 (2009-06-27), pages 12 - 18, XP093251678, Retrieved from the Internet <URL:https://www.sciencedirect.com/science/article/pii/S1369702109701762> [retrieved on 20250218], DOI: https://doi.org/10.1016/S1369-7021(09)70176-2

## Description

### [TECHNICAL FIELD]

### Cross Citation with Related Application(s)

This application claims the benefit of Korean Patent Application No. 10-2021-048229 filed on November 1, 2021 and Korean Patent Application No. 10-2022-0142922 filed on October 31, 2022 in the Korean Intellectual Property Office.

The present disclosure relates to a negative electrode with single-walled carbon nanotubes and a secondary battery including the same.

### [BACKGROUND]

Due to the rapid increase in the use of fossil fuels, the demand for the use of alternative energy or clean energy is increasing, and as part thereof, the fields that are being studied most actively are the fields of power generation and power storage using electrochemistry.

At present, a secondary battery is a representative example of an electrochemical device that utilizes such electrochemical energy, and the range of use thereof tends to be gradually expanding.

In recent years, as mobile devices, such as portable computers, portable phones, and cameras, have been increasingly developed, the demand for secondary batteries has also sharply increased as an energy source for the mobile devices. Among such secondary batteries is a lithium secondary battery exhibiting a high energy density and a high voltage, a long cycle lifespan, and a low self-discharge rate, in which much research has been carried out and which is now commercialized and widely used.

Generally, the lithium secondary battery is manufactured by impregnating an electrode assembly including a positive electrode, a negative electrode and a porous separator with a lithium non-aqueous electrolyte, wherein the respective electrodes are manufactured by forming an electrode mixture including an electrode active material, a conductive material and a binder on a current collector.

The basic performance characteristics of such a lithium secondary battery are greatly affected by the negative electrode material. In order to maximize battery performance, several conditions are required, for example, the negative electrode active material must have an electrochemical reaction potential close to that of lithium metal, must have high reversibility of reaction with lithium ions, and must have a high diffusion rate of lithium ions in the active material. However, graphite is often used as a material that meets these requirements, and considering the excellent adhesion strength of natural graphite and the excellent output and lifespan characteristics of artificial graphite, mixtures of natural graphite and artificial graphite have been used to improve the secondary battery performance from various aspects.

However, in recent years, with the growth of device fields that require high-capacity batteries, such as electric vehicles and hybrid electric vehicles, the level of energy density required for lithium secondary batteries is continuously increasing, whereby attempts have been made to use a negative electrode containing Si, which has a high theoretical capacity, as a negative electrode active material.

Meanwhile, when a negative electrode active material such as the SiO containing Si is included, the volume expansion rate of the negative electrode due to the charging and discharging is high, and thus, there is a problem such as desorption of the negative electrode mixture, which leads to a problem of deterioration in lifespan characteristics.

Thus, conventionally, a porous matrix was used, a small-sized active material was dispersed in an inert matrix, the size of the active material was reduced, or the type and amount of the binder were adjusted.

Meanwhile, as a conductive material added for conductivity of the active materials, long-shaped carbon nanotubes have been often used to improve conductivity between the active materials.

However, despite the use of carbon nanotubes, it is still not possible to secure sufficient conductivity, and there is a problem that as the cycle progresses, such a conductivity is further deteriorated and the lifespan characteristics are also deteriorated.

Therefore, there is an urgent need to develop a secondary battery technology that can solve these problems and ensure sufficient conductivity.

### [DETAILED DESCRIPTION OF THE INVENTION]

### [Technical Problem]

The present disclosure has been designed to solve the above-mentioned problems and other technical problems that have yet to be resolved.

Specifically, it is an object of the present disclosure to provide a secondary battery in which active materials secure sufficient conductivity to lower resistance and, at the same time, the lifespan characteristics due to the progress of the cycle are improved.

### [Technical Solution]

In order to achieve the above objects, there is provided a negative electrode for a secondary battery which is configured to form a negative electrode mixture on at least one surface of a negative electrode current collector,
wherein the negative electrode mixture comprises a negative electrode active material and a conductive material,
wherein the negative electrode active material comprises a silicon-based active material, and
wherein the conductive material is composed of a single-walled carbon nanotube (SWCNT).

At this time, the single-walled carbon nanotube comprises a first shape that connects surfaces of two or more negative electrode active material particles, and a second shape that covers surfaces of respective negative electrode active material particles, wherein a content of the conductive material formed in the first shape is 40% to 70% by weight of the total amount of the conductive material.

A diameter of the single-walled carbon nanotube may be 1nm to 2nm, a length of the single-walled carbon nanotube may be 2 *µ*m to 5 *µ*m, and an aspect ratio of the single-walled carbon nanotube may be 1000 to 5000.

Moreover, the single-walled carbon nanotube may have a secondary shape aggregated in a bundle type.

The negative electrode mixture further comprises a binder and a dispersant.

According to another embodiment of the present invention, there is provided a method of manufacturing the negative electrode for secondary battery, in which:
when preparing a negative electrode active material slurry containing an active material and a conductive material composed of a single-walled carbon nanotube (SWCNT), the conductive material of the single-walled carbon nanotube is dividedly added.

Specifically, the negative electrode active material slurry further comprises a binder, wherein the dividedly adding is a procedure in which 30% to 60% by weight of the conductive material, based on the total weight of the conductive material composed of the single-walled carbon nanotube, is previously mixed with the negative electrode active material, and the remaining 40% to 70% by weight of the conductive material composed of the single-walled carbon nanotube is additionally added together with a binder, and subsequently mixed.

More specifically, the method of manufacturing the negative electrode may comprise the steps of:
(a) mixing a conductive material of single-walled carbon nanotube (SWCNT) with a dispersant under a solvent to prepare a pre-dispersion solution;
(b) adding a negative electrode active material to a portion of the pre-dispersion solution to prepare an active material solution;
(c) adding the remaining pre-dispersion solution to the active material solution and adding a binder thereto to prepare an active material slurry; and
(d) applying the active material slurry to at least one surface of a negative electrode current collector, drying and rolling it to manufacture a negative electrode.

Wherein, in step (b), a negative electrode active material is added to 30% to 60% by weight of the pre-dispersion solution based on the total weight of the pre-dispersion solution, and in step (c), 40% to 70% by weight of the remaining pre-dispersion solution based on the total weight of the pre-dispersion solution is added.

According to yet another embodiment of the present disclosure, there is provided a secondary battery which is configured to incorporate an electrode assembly into a secondary battery case together with an electrolyte solution, the electrode assembly comprising:
the negative electrode,
a positive electrode in which a positive electrode mixture containing a positive electrode active material is formed on at least one surface of a positive electrode current collector; and
a separator interposed between the negative electrode and the positive electrode,
wherein the secondary battery has a DCIR growth rate at cycle 100 of 47% or less relative to the initial DCIR value.

In addition, the secondary battery may have a retention rate of 91% or more of the discharge capacity at cycle 100 relative to the initial discharge capacity.

At this time, the positive electrode active material may comprise a lithium transition metal oxide represented by the following Chemical Formula 1:

Li₁₊ₓNiₐCo_{b}Mn_{c}M_{1-(a+b+c)}O_{2-y}A_{y} (1)

wherein,
M is at least one selected from the group consisting of Cu, Ti, Mg, Al, Pt, and Zr,
A is an oxygen-substitution type halogen, and
0≤x≤0.5, 0.8≤a≤1, 0≤b≤0.2, 0≤c≤0.2, 0.9≤a+b+c≤1, and 0≤y≤0.001.

Furthermore, the negative electrode is manufactured by a method in which the conductive material is dividedly added, whereby the conductive material increases the connectivity between the active materials and also increase the conductivity on the surface of the active material, so that the resistance is remarkably reduced and the effect of improving the lifespan characteristics is even greater.

### [BRIEF DESCRIPTION OF THE DRAWINGS]

Fig. 1 is a SEM photograph of the surface of the negative electrode mixture of Example 1;
Fig. 2 is a SEM photograph of the surface of the negative electrode mixture of Comparative Example 1;
Fig. 3 is a SEM photograph of the surface of the negative electrode mixture of Comparative Example 2;
Fig. 4 is a graph of the lifespan characteristics and resistance increase rate of Example 1 according to Experimental Example 2;
Fig. 5 is a graph of the lifespan characteristics and resistance increase rate of Comparative Example 1 according to Experimental Example 2;
Fig. 6 is a graph of the lifespan characteristics and resistance increase rate of Comparative Example 2 according to Experimental Example 2; and
Fig. 7 is a graph of the lifespan characteristics and resistance increase rate of Comparative Example 3 according to Experimental Example 2.

### [DETAILED DESCRIPTION OF THE EMBODIMENTS]

Hereinafter, the present disclosure will be described in more detail for a better understanding of the present disclosure.

Terms or words used in the present specification and claims should not be construed as limited to ordinary or dictionary terms, and the present disclosure should be construed with meanings and concepts that are consistent with the technical idea of the present disclosure based on the principle that the inventors may appropriately define concepts of the terms to appropriately describe their own disclosure in the best way.

The technical terms provided herein is merely used for the purpose of describing particular embodiments only, and is not intended to be limiting of the present disclosure. The singular forms "a," "an," and "the" are intended to include the plural forms as well, unless the context clearly indicates otherwise.

The term "including" or "comprising" as used herein specifies a specific feature, integer, step, action, component or a combination thereof, but does not exclude the presence or addition of a different specific feature, integer, step, component and/or a combination thereof.

According to one embodiment of the present disclosure, there is provided a negative electrode for a secondary battery which is configured to form a negative electrode mixture on at least one surface of a negative electrode current collector,
wherein the negative electrode mixture comprises a negative electrode active material and a conductive material,
wherein the negative electrode active material comprises a silicon-based active material, and
wherein the conductive material is composed of a single-walled carbon nanotube (SWCNT).

In recent years, in order to manufacture a secondary battery having a high energy density, research has been conducted to use a silicon-based active material having a high theoretical capacity as a negative electrode active material.

However, when a silicon-based active material is used as the negative electrode active material, the volume expansion due to the charging and discharging is excessive, which makes it difficult to secure conductivity due to the progress of the cycle.

Thus, in order to secure such conductivity, long-shaped carbon nanotubes are recently used as a conductive material. However, conventionally, multi-walled carbon nanotubes (MWCNT) having a large number of bonds forming the walls has been used, but this has still a problem that their conductivity decreases as the cycle progresses. In particular, multi-walled carbon nanotubes are relatively short in length, which are disadvantageous in securing conductivity between the active materials.

Thus, the present inventors have considered the use of single-walled carbon nanotubes that can simultaneously exhibit both metallic characteristics and semiconducting characteristics, and shows a nano-rod shape and has a small number of carbon nanotubes, but exhibits good electrical conductivity between active materials using relatively long carbon nanotubes. However, simple mixing of the conductive material and the active material as in the conventional case has problem that even if it is located on the surface of the active material and ensures conductivity between the negative electrode current collector and the active material, the conductivity between the negative electrode active materials is reduced and sufficient conductivity cannot be obtained.

Thus, the present inventors have found that when the single-walled carbon nanotube includes a first shape that connects surfaces of two or more negative electrode active material particles, and a second shape that covers surfaces of respective negative electrode active material particles, it can have sufficient conductivity even if the cycle progresses, whereby the resistance increase rate is not large, and the lifespan characteristic is improved, and completed the present disclosure.

At this time, the content of the conductive material formed in the first shape may be 40% to 70% by weight of the total amount of conductive material.

If the content of the conductive material formed in the first form is too small outside the above range, the conductivity between active materials cannot be sufficiently secured, and particularly, it is not possible to solve the problem that the conductivity of the active material decreases due to volume expansion accompanying the progress of the cycle, which is not preferable.

A method of manufacturing the negative electrode so as to have both the first shape and the second shape will be described below.

Meanwhile, the diameter of the single-walled carbon nanotubes may be 1 nm to 3 nm, specifically 1 nm to 2 nm.

If the average diameter is too small outside the above range, the dispersed carbon nanotubes are buried between the negative electrode active material particles, making it difficult to form sufficient pores, and if the average diameter is too large, an excellent effect of improving conductivity cannot be obtained, which is thus not preferable.

Further, the length of the single-walled carbon nanotube is not particularly limited, but the length of the single-walled carbon nanotubes may be 1 *µ*m to 7 *µ*m, specifically 2 *µ*m to 5 *µ*m.

As the length of the single-walled carbon nanotube becomes longer, the conductivity of the negative electrode is improved, and the strength and the electrolyte storage property can also be improved, but if the length is too long outside the above range, the dispersibility may deteriorate, and thus, the above range is most appropriate.

Here, the diameter and length can be measured by AFM (atomic force microscopy).

As described above, the aspect ratio (length/diameter) of the single-walled carbon nanotube, which is defined by the ratio of the diameter to the length of the single-walled carbon nanotube, may be 500 to 7000, and specifically 1000 to 5000.

Meanwhile, the single-walled carbon nanotubes may generally exist in a shape in which a plurality of such single-walled carbon nanotubes are bundled together, and depending on the shape, it may have a secondary shape aggregated in an entangled type or a bundle type, and specifically, it may have a secondary shape aggregated in a bundle type.

Specifically, unless otherwise stated, the term "bundle type" as used herein refers to a shape in which a plurality of carbon nanotubes are arranged side by side, or a secondary shape such as a spirally wound bundle shape or a rope shape. The term "entangled type" means that a plurality of carbon nanotubes entangle with each other without being limited to a specific orientation.

In the chemical vapor deposition method, the above shape can be prepared by varying the temperature in order to produce a carbon nanotube of a desired shape. At this time, since the carbon nanotube with the entangled type structure has a bundled structure and is similar to the intermediate shape of the sphere type conductive material and the carbon nanotube with the bundle-type structure, which is thus disadvantageous for forming a network structure, whereas in the bundle-type structure, carbon atoms are spaced apart from each other by a predetermined distance and exist in strands, which is easier to transport electrons. Therefore, it is more preferable to have a bundle type structure when it is necessary to secure electrical conductivity according to the present disclosure.

The specific surface area of the single-walled carbon nanotubes having such a secondary shape may be 800 to 1400m²/g, specifically 1000 to 1200m²/g.

If the specific surface area is too small outside the above range, it is difficult to ensure sufficient conductivity, and if the specific surface area is too large, the dispersibility may decrease, which is not preferable.

Such a specific surface area represents the BET specific surface area, which is measured by the BET method. Specifically, the specific surface area can be calculated from the nitrogen gas adsorption amount at 77K under liquid nitrogen temperature using BELSORP-mino II (BEL Japan Inc.).

Such a conductive material may be contained in an amount of 0.01 to 10% by weight, specifically, 0.05 to 1% by weight, more specifically, 0.05 to 0.2% by weight based on the total weight of the negative electrode mixture.

Meanwhile, the negative electrode active material may include other conventionally well-known active materials in addition to the silicon-based active material.

For example, carbons such as hardly graphitizable carbon and graphite-based carbon; metal composite oxides such as LiₓFe₂O₃(0≤x≤1), LiₓWO₂(0≤x≤1), SnₓMe₁₋ₓMe'_{y}O_{z} (Me: Mn, Fe, Pb, Ge; Me': Al, B, P, Si, Group 1, 2, 3 elements in the periodic table, halogen; 0<x≤1; 1≤y≤3; 1≤z≤8); lithium metal; lithium alloys; silicon-based alloys; tin-based alloys; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; a conductive polymer such as polyacetylene; Li-Co-Ni based materials, and the like can be used.

In particular, among the active materials, graphite-based carbon can be mixed.

At this time, the silicon-based active material may be contained in an amount of 1% to 20% by weight, specifically 5% to 10% by weight, based on the total weight of the negative electrode active material.

In addition, the negative electrode mixture may further include a binder and a dispersant.

The binder is not limited as long as it is a component that assists in coupling of an active material, a conductive material, and the like, and in coupling of a current collector. For example, it may be selected from polyvinylidene fluoride, polyvinyl alcohol, carboxymethyl cellulose (CMC), starch, hydroxypropyl cellulose, regenerated cellulose, polyvinylpyrrolidone, tetrafluoroethylene, polytetrafluoroethylene, polyethylene, polypropylene, ethylene-propylene-diene polymer (EPDM), sulfonated EPDM, styrene-butadiene rubber, fluorine rubber, various copolymers, and the like, respectively.

Wherein, the binder may be contained in an amount of 0.1 to 30% by weight, specifically 0.5 to 10% by weight, more specifically 1 to 5% by weight based on the total weight of the negative electrode mixture.

The dispersant is not limited as long as it is conventionally known in the art, but may be one or more materials selected from the group consisting of carboxymethylcellulose(CMC), polyvinylpyrrolidone, polyvinyl alcohol, polyacrylic acid, acrylonitrile-butadiene rubber, and styrene-ethylene oxide. Specifically, it may be a mixture of acrylonitrile-butadiene rubber and styrene-ethylene oxide.

Wherein, the dispersant may be contained in an amount of 0.01 to 5% by weight, specifically 0.05 to 1% by weight, more specifically 0.05 to 0.5% by weight based on the total weight of the negative electrode mixture.

The negative electrode current collector is not particularly limited as long as it has high conductivity without causing a chemical change in the battery. For example, stainless steel, aluminum, nickel, titanium, sintered carbon, and a material formed by surface-treating a surface of copper, aluminum or stainless steel with carbon, nickel, titanium, silver, or the like can be used. The current collector can also form fine irregularities on a surface thereof to enhance the adhesive strength of the negative electrode active material, and can be used in various forms such as a film, a sheet, a foil, a net, a porous body, a foaming body, and a non-woven fabric structure.

Meanwhile, according to yet another embodiment of the present disclosure, there is provided a method of manufacturing the negative electrode for a secondary battery, in which:
when preparing a negative electrode active material slurry containing an active material and a conductive material composed of a single-walled carbon nanotube (SWCNT), the conductive material of the single-walled carbon nanotube is dividedly added.

Specifically, the negative electrode active material slurry further comprises a binder, and the dividedly adding is a procedure in which 30% to 60% by weight of the conductive material, based on the total weight of the conductive material composed of the single-walled carbon nanotube, is previously mixed with the negative electrode active material, and the remaining 40% to 70% by weight of the conductive material composed of the single-walled carbon nanotube is additionally added together with a binder, and subsequently mixed.

More specifically, the method of manufacturing the negative electrode may comprise the steps of:
(a) mixing a conductive material of single-walled carbon nanotube (SWCNT) with a dispersant under a solvent to prepare a pre-dispersion solution;
(b) adding a negative electrode active material to a portion of the pre-dispersion solution to prepare an active material solution;
(c) adding the remaining pre-dispersion solution to the active material solution and adding a binder thereto to prepare an active material slurry; and
(d) applying the active material slurry to at least one surface of a negative electrode current collector, drying and rolling it to manufacture a negative electrode.

First, before mixing with the negative electrode active material, a conductive material of single-walled carbon nanotubes is mixed with a dispersant under a solvent to prepare a pre-dispersion solution.

Here, the types of conductive material and dispersant for the single-walled carbon nanotubes are as described above.

At this time, the content ratio of the conductive material and the dispersant may be 2:1 to 100:1, specifically 5:1 to 20:1, based on weight.

The solvent is a solvent for preparing a negative electrode active material, and can be used without particular limitation as long as it is commonly used in the art. Specifically, the solvent may include dimethyl sulfoxide (DMSO), isopropyl alcohol, N-methylpyrrolidone (NMP), acetone or water, and any one of these or a mixture of two or more can be used. The amount of the solvent used is sufficient to have a viscosity capable of exhibiting excellent thickness uniformity when dissolving or dispersing the negative electrode active material, conductive material, dispersant, and binder in consideration of the application thickness and production yield of the slurry, and subsequently performing the application for negative electrode manufacture.

Next, a negative electrode active material is added to a portion of the pre-dispersion solution to prepare an active material solution.

At this time, the pre-dispersion solution is used in an amount of 30% to 60% by weight based on the total weight of the prepared pre-dispersion solution.

By adding the negative electrode active material, the conductive material of the pre-dispersion solution is positioned in a shape that covers the surface of the negative electrode active material.

Next, the remaining pre-dispersion solution is added to the active material solution obtained by mixing them, and then the binder is further added thereto, thereby capable of preparing an active material slurry.

At this time, the pre-dispersion solution added is the remainder except the previously added pre-dispersion solution, and may be 40% to 70% by weight based on the total weight of the pre-dispersion solution.

The pre-dispersion solution additionally added in step (c) is formed in a shape that connects the surfaces of the active material particles so as to form conductivity between the active materials.

That is, according to the present disclosure, when the pre-dispersion solution, which is a mixture of the conductive material and the dispersant of single-walled carbon nanotubes, is dividedly added before and after mixing the active material, single-walled carbon nanotubes are present so as to include both a first shape that connects the surfaces of two or more negative electrode active material particles and a second shape that covers the surfaces of each negative electrode active material particle in an appropriate amount, whereby excellent conductivity can be secured even with the progress of the cycle, the increase in resistance is reduced, and the effect of improving lifespan characteristics can be obtained.

Meanwhile, according to yet another embodiment of the present disclosure, there is provided a secondary battery which is configured to incorporate an electrode assembly into a secondary battery case together with an electrolyte solution,
wherein the electrode assembly comprises the negative electrode, a positive electrode in which a positive electrode mixture containing a positive electrode active material is formed on at least one surface of a positive electrode current collector; and a separator interposed between the negative electrode and the positive electrode, and
wherein the secondary battery has a DCIR growth rate at cycle 100 of 47% or less relative to the initial DCIR value.

Specifically, the initial DCIR value is a value obtained by measuring the resistance value after the manufactured secondary battery was charged under a condition of CC/CV 0.5C, 4.2 V (cut-off) and discharged under a condition CC 2.0C, 2.5V (cut-off), then, charged again and discharged under a condition of 2.0C, 50% SOC for 10 seconds. The discharge capacity at cycle 100 is a value obtained by measuring the resistance value after performing 100 cycles under the above charge and discharge conditions, and then charging again and discharging under a condition of 2.0C, 50% SOC for 10 seconds.

At this time, in the value comparing them, the growth rate is 47% or less.

Further, the secondary battery may have a discharge capacity retention rate at cycle100 of 91% or more relative to the initial discharge capacity.

Specifically, the initial discharge capacity is the discharge capacity when the manufactured secondary battery was charged under a condition of CC/CV 0.5C, 4.2 V (cut-off) and discharged under a condition CC 2.0C, 2.5V (cut-off), and the discharge capacity at cycle 100 is the discharge capacity after 100 cycles under the above charging and discharging conditions. Therefore, the capacity retention rate value can be calculated by representing by (Discharge capacity at cycle 100/Discharge capacity at cycle 1) x 100.

At this time, as the positive electrode active material is required to have high energy density for a secondary battery, a Ni-excessive positive electrode active material with a high Ni content can be used.

The positive electrode active material may comprise a lithium transition metal oxide represented by the following Chemical Formula 1:

Li₁₊ₓNiₐCo_{b}Mn_{c}M_{1-(a+b+c)}O_{2-y}A_{y} (1)

wherein,
M is at least one selected from the group consisting of Cu, Ti, Mg, Al, Pt, and Zr,
A is an oxygen-substitution type halogen, and
0≤x≤0.5, 0.8≤a≤1, 0≤b≤0.2, 0≤c≤0.2, 0.9≤a+b+c≤1, and 0≤y≤0.001.

More specifically, a may be 0.88 ≤ a<1.

Further, the lithium transition metal oxide may be a bimodal mixture of a large particle and a small particle.

At this time, the large particle may have an average diameter (D50) of 10 to 20 *µ*m, and the small particle may have an average diameter (D50) of 1 to 7 *µ*m.

In the case of having a bimodal structure as described above, it is more preferable because the performance can be improved by improving the packing density and reducing the resistance inside the electrode, and the performance is improved by maximizing the contact between the positive electrode active material and the electrolyte solution.

The bimodal structure means a structure in which two distribution peaks appear based on the average diameter distribution map of lithium transition metal oxide.

Meanwhile, the positive electrode active material may, in addition to the Ni- excess lithium transition metal oxide, further include a layered compound such as lithium cobalt oxide (LiCoO₂), lithium nickel oxide (LiNiO₂), or a compound substituted with one or more transition metals; lithium manganese oxides such as chemical formulae Li₁₊ₓMn₂₋ₓO₄ (where x is 0 ~ 0.33), LiMnO₃, LiMn₂O₃, LiMnO₂; lithium copper oxide (Li₂CuO₂); vanadium oxides such as Liv₃O₈, LiV₃O₄, V₂O₅, and Cu₂V₂O₇; a Ni-site type lithium nickel oxide represented by chemical formula LiNi₁₋ₓMₓO₂ (where M=Co, Mn, Al, Cu, Fe, Mg, B or Ga, and x=0.01 ~ 0.3); lithium manganese composite oxide represented by chemical formulae LiMn₂₋ₓMₓO₂ (where M = Co, Ni, Fe, Cr, Zn or Ta, and x = 0.01 ~ 0.1) or Li₂Mn₃MO₈ (where, M = Fe, Co, Ni, Cu or Zn); lithium manganese composite oxide having a spinel structure represented by chemical formula LiNiₓMn₂₋ₓO₄; LiMn₂O₄ in which a part of Li in the chemical formula is substituted with an alkaline earth metal ion; lithium iron phosphate represented by LiFePO₄; disulfide compound; Fe₂(MoO₄)₃, or the like.

At this time, the lithium transition metal oxide may be contained in an amount of 80% to 100% by weight, specifically 100% by weight, based on the total weight of the positive electrode active material.

The positive electrode current collector is not particularly limited as long as it has conductivity while not causing chemical changes to the battery, and for example, stainless steel, aluminum, nickel, titanium, calcined carbon, or aluminum or stainless steel having a surface treated with carbon, nickel, titanium, silver, and the like can be used. In addition, the positive electrode current collector may have a thickness of 3 *µ*m to 500 *µ*m, and may have fine irregularities formed on the surface of the current collector to increase the adhesion strength of the positive electrode active material. For example, it may be used in various forms such as films, sheets, foils, nets, porous bodies, foams, and nonwoven fabrics.

Other components included in the secondary batteries are well known in the art, and thus, a detailed description thereof is omitted herein, and the conventional structure is included within the present disclosure.

Hereinafter, preferred examples of the present disclosure, comparative examples for comparing them, and experimental examples for evaluating them are described.

### <Preparation Example 1>

SWCNT(Single-walled carbon nanotube available from ANP) was prepared as a conductive material.

The conductive material and carboxymethylcellulose (CMC) as a dispersant were mixed in a weight ratio of 1:2 under an N-methylpyrrolidone solvent to select a pre-dispersion solution A.

### <Preparation Example 2>

Carboxymethylcellulose (CMC) as a dispersant was mixed under an N-methylpyrrolidone solvent to prepare a pre-dispersion solution B.

### <Example 1>

A negative electrode active material mixed with SiO:graphite at a weight ratio of 5:95 as a negative electrode active material was added to 50 wt.% of a pre-dispersion solution A to prepare an active material solution.

Then, the remaining pre-dispersion solution A was added to the active material solution, and styrene-butadiene rubber (SBR) as a binder, and carboxymethylcellulose-sodium (CMC) as a thickener was added, and mixed to prepare an active material slurry.

At this time, the amount of the negative electrode active material and the binder added was set such that the weight ratio of the negative electrode active material, conductive material, dispersant, binder, and thickener in the final active material slurry was 97.2:0.2:0.6: 1: 1.

The prepared active material slurry was applied to a 10 *µ*m copper current collector in a loading amount of 10 mg/cm² to manufacture a negative electrode.

### <Comparative Example 1>

A negative electrode was manufactured in the same manner as in Example 1, except that in Example 1, a negative electrode active material was added to the total 100 wt.% of the pre-dispersion solution A to prepare an active material solution, and then the pre-dispersion solution B was mixed.

### <Comparative Example 2>

A negative electrode was manufactured in the same manner as in Example 1, except that in Example 1, a negative electrode active material was added to the pre-dispersion solution B, and then the pre-dispersion solution B was further added at 100 wt.%.

### <Comparative Example 3>

SWCNT(Single-walled carbon nanotube, ANP) and MWCNT(Multi-walled carbon nanotube, ANP) were prepared as conductive materials, respectively.

A conductive material in which the SWCNT and the MWCNT were mixed in a weight ratio of 1:10, and carboxymethylcellulose (CMC) as a dispersant were mixed at a weight ratio of 1:1.5 under an N-methylpyrrolidone solvent to prepare a pre-dispersion solution C.

A negative electrode was manufactured in the same manner as in Example 1, except that a negative electrode active material was added to the total 100 wt.% of the pre-dispersion solution C to prepare an active material solution, and then the pre-dispersion solution B was mixed.

### <Experimental Example 1>

### SEM photograph

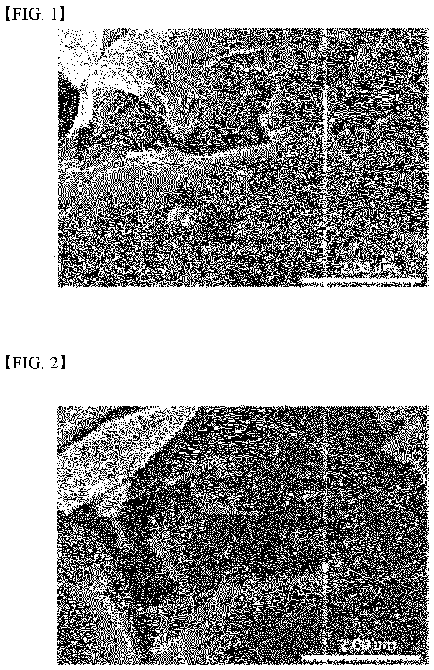

Planar SEM photographs of the negative electrodes manufactured in Example 1 and Comparative Examples 1 and 2 were taken, and the results are shown in Figs. 1 to 3.

Referring to Figs. 1 to 3, it can be confirmed that in the negative electrode according to the present disclosure, the conductive material connects the active materials and is distributed over the entire surface of the active materials, whereas it can be conformed that in the negative electrode according to Comparative Example 1, the conductive material is distributed on the surface of the active material, but the active materials are not effectively connected, and in the negative electrode according to Comparative Example 2, the conductive material connects the active materials, but the amount distributed on the surface is extremely small.

### <Experimental Example 2>

### Measurement of DCIR growth rate

LiNi_{0.88}Co_{0.07}Mn_{0.04}Al_{0.01}O₂ as a positive electrode active material, the SWCNT as a conductive material, PVdF as a binder, and hematoporphyrin derivative (HPD) as a dispersant were mixed in a weight ratio of 98.5:0.05:1.37:0.08 under N-methylpyrrolidone solvent to prepare a composition for forming a positive electrode, which was applied to the aluminum current collector so that the loading amount was 18mg/cm² to manufacture a positive electrode.

A polyethylene material separator (thickness: 15 um) was interposed between the negative electrodes manufactured in Example 1 and Comparative Examples 1 to 3, and the positive electrode, and then an electrolyte solution, containing a mixed solvent of ethylene carbonate (EC), ethylmethyl carbonate (EMC), and dimethyl carbonate (DMC) in a volume ratio of 20:10:70, and containing 1M of 1.3M LiPF₆ among the total amount of the electrolyte solution, was injected to manufacture a secondary battery.

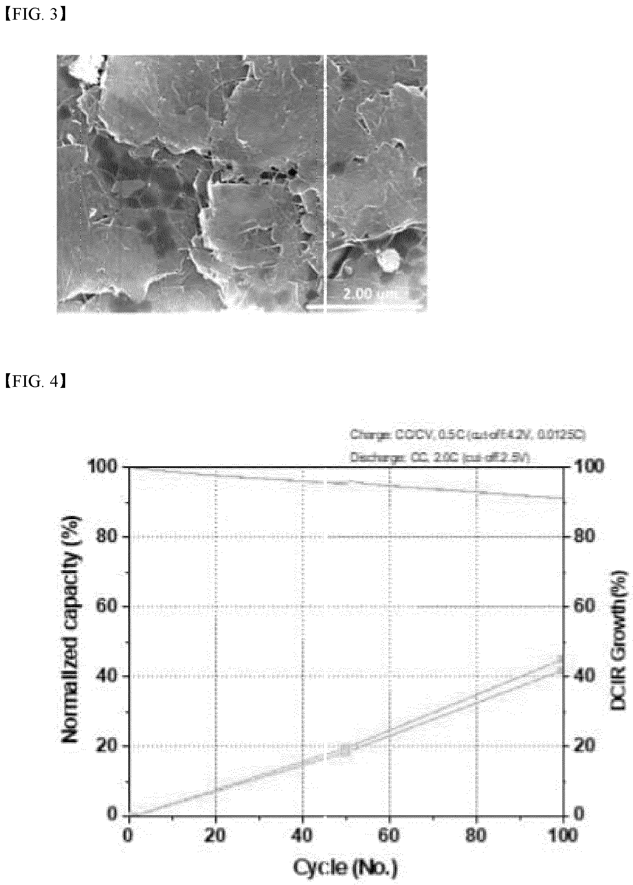

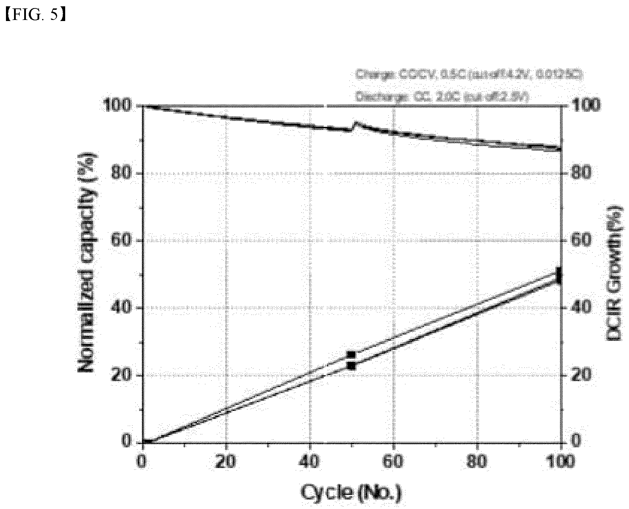

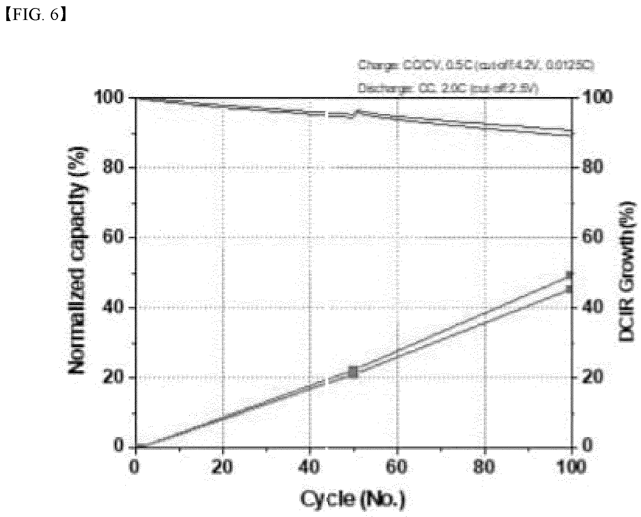

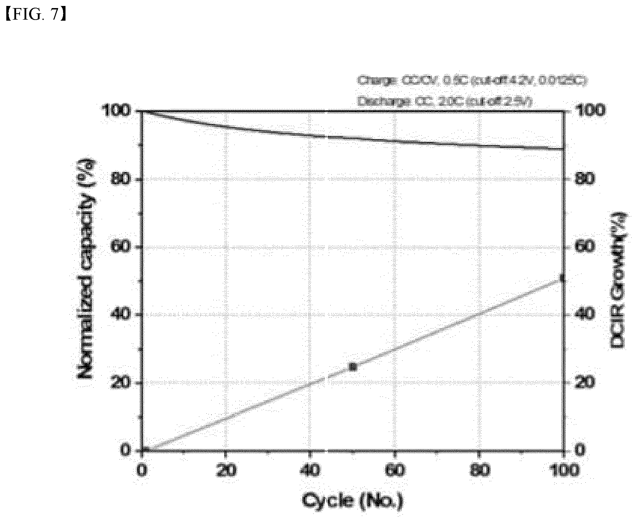

Then, the manufactured secondary batteries were charged under a condition of CC/CV 0.5C, 4.2 V (cut-off) and discharged under a condition of CC 2.0C, 2.5V (cut-off), then, charged again and discharged under a condition of 2.0C, 50% SOC for 10 seconds. The resistance value was measured, and the resistance value according to the cycle was calculated as a growth rate relative to the resistance value of the first cycle, and the results are shown in Figs. 4 to 7 below.

Referring to Figs. 4 to 7, it can be confirmed that in the case of Example 1 according to the present disclosure, the resistance growth rate was about 43.4%, whereas in the case of Comparative Examples 1 and 2, the resistance growth rate was greater than 47%. Even in the case of using MWCNT, it can be confirmed that when proceeding with one-time addition, sufficient conductivity between active materials was not secured, and the resistance growth rate was similar to that of Comparative Example 1.

### <Experimental Example 3>

### Lifespan characteristics

Secondary batteries manufactured in Example 1 and Comparative Examples 1 to 3 were charged under a condition of CC/CV 0.5C, 4.2 V (cut-off) and discharged under a condition of CC 2.0C, 2.5V (cut-off), and the discharge capacity was measured. The discharge capacity retention rate according to each cycle relative to initial discharge capacity was calculated by (Discharge capacity at cycle 100 / Discharge capacity at cycle 1) x 100, and the results are shown together in Figs. 4 to7.

Referring to Figs. 4 to 7, it can be confirmed that Example 1 according to the present disclosure exhibited an excellent capacity retention rate of 91% or more, whereas Comparative Examples 1 to 3 exhibited a lower capacity retention rate than that of the present disclosure, which can expect that the gap will increase as the cycle progresses.

Based on the above disclosure, various applications and modifications can be carried out by those of ordinary skill in the art without deviating from the spirit and scope of the present disclosure.

### [Industrial Applicability]

As described above, a negative electrode according to one embodiment of the present disclosure includes a single-walled carbon nanotube (SWCNT) as a conductive material, thereby securing excellent conductivity even when the cycle proceeds, reducing the increase in resistance of the secondary battery including the same, and improving lifespan characteristics.

## Claims

1. A method of manufacturing a negative electrode for a secondary battery, the negative electrode comprising a negative electrode mixture on at least one surface of a negative electrode current collector, wherein the negative electrode mixture comprises a negative electrode active material and a conductive material, wherein the negative electrode active material comprises a silicon-based active material, and wherein the conductive material is composed of a single-walled carbon nanotube (SWCNT);
the method comprising preparing a negative electrode active material slurry containing the negative electrode active material and the conductive material composed of the single-walled carbon nanotube (SWCNT), wherein the conductive material of the single-walled carbon nanotube is dividedly added;
wherein the negative electrode active material slurry further comprises a binder; and
wherein 30% to 60% by weight of the conductive material, based on the total weight of the conductive material composed of the single-walled carbon nanotube, is mixed with the negative electrode active material, and then the remaining 40% to 70% by weight of the conductive material composed of the single-walled carbon nanotube is additionally added together with the binder, and subsequently mixed.

2. The method of manufacturing a negative electrode according to claim 1, wherein the method comprises the steps of:
(a) mixing the conductive material composed of single-walled carbon nanotube (SWCNT) with a dispersant in a solvent to prepare a pre-dispersion solution;
(b) adding the negative electrode active material to a portion of the pre-dispersion solution to prepare an active material solution;
(c) adding the remaining pre-dispersion solution to the active material solution and adding the binder thereto to prepare the active material slurry; and
(d) applying the active material slurry to at least one surface of the negative electrode current collector, drying and rolling it to manufacture the negative electrode;
wherein in step (b), the negative electrode active material is added to 30% to 60% by weight of the pre-dispersion solution based on the total weight of the pre-dispersion solution, and
wherein in step (c), the remaining 40% to 70% by weight of the pre-dispersion solution, based on the total weight of the pre-dispersion solution, is added.

3. A negative electrode for a secondary battery obtainable by the method according to claim 1 or 2.

4. A secondary battery comprising an electrode assembly in a secondary battery case together with an electrolyte solution, the electrode assembly comprising :
the negative electrode as set forth in claim 3;
a positive electrode in which a positive electrode mixture containing a positive electrode active material is formed on at least one surface of a positive electrode current collector; and
a separator interposed between the negative electrode and the positive electrode;
wherein the secondary battery has a DCIR growth rate at cycle 100 of 47% or less relative to an initial DCIR value, measured as described in the description; and
wherein the positive electrode active material comprises a lithium transition metal oxide represented by the following Chemical Formula 1:
Li₁₊ₓNiₐCo_{b}Mn_{c}M_{1-(a+b+c)}O_{2-y}A_{y} (1)
wherein
M is at least one selected from the group consisting of Cu, Ti, Mg, Al, Pt, and Zr,
A is an oxygen-substitution type halogen, and
0≤x≤0.5, 0.8≤a≤1, 0≤b≤0.2, 0≤c≤0.2, 0.9≤a+b+c≤1, and 0≤y≤0.001.

5. The secondary battery according to claim 4, which has a retention rate of 91% or more of the discharge capacity at cycle 100 relative to an initial discharge capacity, measured as described in the description.

## Patentansprüche

1. Verfahren zur Herstellung einer negativen Elektrode für eine Sekundärbatterie, wobei die negative Elektrode eine negative Elektrodenmischung auf mindestens einer Oberfläche eines negativen Elektrodenstromkollektors umfasst, wobei die negative Elektrodenmischung ein negatives Elektrodenaktivmaterial und ein leitfähiges Material umfasst, wobei das negative Elektrodenaktivmaterial ein Aktivmaterial auf Siliciumbasis umfasst und wobei das leitfähige Material aus einem einwandigen Kohlenstoffnanoröhrchen (SWCNT) zusammengesetzt ist,
wobei das Verfahren das Herstellen einer negativen Elektrodenaktivmaterialpaste umfasst, die das negative Elektrodenaktivmaterial und das aus dem einwandigen Kohlenstoffnanoröhrchen (SWCNT) zusammengesetzte leitfähige Material enthält, wobei das leitfähige Material aus dem einwandigen Kohlenstoffnanoröhrchen getrennt zugegeben wird,
wobei die negative Elektrodenaktivmaterialpaste ferner ein Bindemittel umfasst und
wobei 30 bis 60 Gew.-% des leitfähigen Materials, bezogen auf das Gesamtgewicht des aus dem einwandigen Kohlenstoffnanoröhrchen zusammengesetzten leitfähigen Materials, mit dem negativen Elektrodenaktivmaterial gemischt werden und dann die übrigen 40 bis 70 Gew.-% des aus dem einwandigen Kohlenstoffnanoröhrchen zusammengesetzten leitfähigen Materials zusammen mit dem Bindemittel zusätzlich zugegeben werden und anschließend gemischt wird.

2. Verfahren zur Herstellung einer negativen Elektrode gemäß Anspruch 1, wobei das Verfahren die Schritte umfasst:
(a) Mischen des aus dem einwandigen Kohlenstoffnanoröhrchen (SWCNT) zusammengesetzten leitfähigen Materials mit einem Dispergiermittel in einem Lösungsmittel, um eine Vordispersionslösung zu erhalten,
(b) Zugeben des negativen Elektrodenaktivmaterials zu einem Teil der Vordispersionslösung, um eine Aktivmateriallösung herzustellen,
(c) Zugeben der übrigen Vordispersionslösung zu der Aktivmaterialösung und Zugeben des Bindemittels dazu, um eine Aktivmaterialpaste herzustellen, und
(d) Auftragen der Aktivmaterialpaste auf mindestens eine Oberfläche des negativen Elektrodenstromkollektors, Trocknen und Walzen, um die negative Elektrode herzustellen,
wobei in Schritt (b) das negative Elektrodenaktivmaterial zu 30 bis 60 Gew.-% der Vordispersionslösung, bezogen auf das Gesamtgewicht der Vordispersionslösung, zugegeben wird und
wobei in Schritt (c) die übrigen 40 bis 70 Gew.-% der Vordispersionslösung, bezogen auf das Gesamtgewicht der Vordispersionslösung, zugegeben werden.

3. Negative Elektrode für eine Sekundärbatterie, erhältlich durch das Verfahren gemäß Anspruch 1 oder 2.

4. Sekundärbatterie, umfassend eine Elektrodenanordnung in einem Sekundärbatteriegehäuse zusammen mit einer Elektrolytlösung, wobei die Elektrodenanordnung umfasst:
die negative Elektrode gemäß Anspruch 3,
eine positive Elektrode, bei der eine positive Elektrodenmischung, die ein positives Elektrodenaktivmaterial enthält, auf mindestens einer Oberfläche eines positiven Elektrodenstromkollektors gebildet ist, und
einen Separator, der zwischen der negativen Elektrode und der positiven Elektrode eingefügt ist,
wobei die Sekundärbatterie eine DCIR-Wachstumsrate bei Zyklus 100 von 47 % oder weniger, relativ zum Anfangs-DCIR-Wert, gemessen wie in der Beschreibung beschrieben, aufweist und
wobei das positive Elektrodenaktivmaterial ein durch die folgende chemische Formel 1 dargestelltes Lithiumübergangsmetalloxid umfasst:
Li₁₊ₓNiₐCo_{b}Mn_{c}M_{1-(a+b+c})O_{2-y}A_{y} (1)
worin
M mindestens eines, ausgewählt aus der Gruppe, bestehend aus Cu, Ti, Mg, Al, Pt und Zr, ist,
A ein Halogen vom Sauerstoffsubstitutionstyp ist und
0≤x≤0,5, 0,8≤a≤1, 0≤b≤0,2, 0≤c≤0,2, 0,9≤a+b+c≤1 und 0≤y≤0,001 ist.

5. Sekundärbatterie gemäß Anspruch 4, die eine Erhaltungsrate von 91 % oder mehr der Entladekapazität bei Zyklus 100, relativ zu einer Anfangsentladekapazität, gemessen wie in der Beschreibung beschrieben, aufweist.

## Revendications

1. Procédé de fabrication d'une électrode négative pour une batterie secondaire, l'électrode négative comprenant un mélange d'électrode négative sur au moins une surface d'un collecteur de courant d'électrode négative, dans lequel le mélange d'électrode négative comprend un matériau actif d'électrode négative et un matériau conducteur, dans lequel le matériau actif d'électrode négative comprend un matériau actif à base de silicium, et dans lequel le matériau conducteur est composé d'un nanotube de carbone simple paroi (SWCNT) ;
le procédé comprenant la préparation d'une suspension de matériau actif d'électrode négative contenant le matériau actif d'électrode négative et le matériau conducteur composé du nanotube de carbone simple paroi (SWCNT), dans lequel le matériau conducteur du nanotube de carbone simple paroi est ajouté de manière fractionnée ;
dans lequel la suspension de matériau actif d'électrode négative comprend en outre un liant ; et
dans lequel 30 % à 60 % en poids du matériau conducteur, sur la base du poids total du matériau conducteur composé du nanotube de carbone simple paroi, est mélangé avec le matériau actif d'électrode négative, et ensuite la portion restante de 40 % à 70 % en poids du matériau conducteur composé du nanotube de carbone simple paroi est ajoutée en outre conjointement avec le liant, et
est ensuite mélangée.

2. Procédé de fabrication d'une électrode négative selon la revendication 1, dans lequel le procédé comprend les étapes consistant à :
(a) mélanger le matériau conducteur composé d'un nanotube de carbone simple paroi (SWCNT) avec un agent dispersant dans un solvant pour préparer une solution de prédispersion ;
(b) ajouter le matériau actif d'électrode négative à une partie de la solution de prédispersion pour préparer une solution de matériau actif ;
(c) ajouter la solution de prédispersion restante à la solution de matériau actif et y ajouter le liant pour préparer la suspension de matériau actif ; et,
(d) appliquer la suspension de matériau actif sur au moins une surface du collecteur de courant d'électrode négative, en le séchant et en le calandrant pour fabriquer l'électrode négative ;
dans lequel, à l'étape (b), le matériau actif d'électrode négative est ajouté à 30 % à 60 % en poids de la solution de prédispersion, sur la base du poids total de la solution de prédispersion, et
dans lequel, à l'étape (c), la partie restante de 40 % à 70 % en poids de la solution de prédispersion, sur la base du poids total de la solution de prédispersion, est ajoutée.

3. Électrode négative pour une batterie secondaire pouvant être obtenue par le procédé selon la revendication 1 ou la revendication 2.

4. Batterie secondaire comprenant un ensemble d'électrodes dans un boîtier de batterie secondaire conjointement avec une solution électrolytique, l'ensemble d'électrodes comprenant :
l'électrode négative telle qu'énoncée dans la revendication 3 ;
une électrode positive dans laquelle un mélange d'électrode positive contenant un matériau actif d'électrode positive est formé sur au moins une surface d'un collecteur de courant d'électrode positive ; et
un séparateur interposé entre l'électrode négative et l'électrode positive ;
dans laquelle la batterie secondaire présente un taux d'augmentation de la DCIR au cycle 100 de 47 % ou inférieur par rapport à une valeur initiale de la DCIR, mesuré tel que décrit dans la description ; et
dans laquelle le matériau actif d'électrode positive comprend un oxyde de métal de transition au lithium représenté par la Formule chimique 1 suivante :
Li₁₊ₓNiₐCo_{b}Mn_{c}M_{1(a+b+c)}O_{2-y}A_{y} (1)
dans laquelle
M est au moins un élément sélectionné dans le groupe consistant en Cu, Ti, Mg, AI, Pt et Zr,
A est un halogène de type substitution de l'oxygène, et
0≤x≤0,5, 0,8≤a≤1, 0≤b≤0,2, 0≤c≤0,2, 0,9≤a+b+c≤1, et 0≤y≤0,001.

5. Batterie secondaire selon la revendication 4, qui présente un taux de rétention de 91 % ou plus de la capacité de décharge au cycle 100 par rapport à une capacité de décharge initiale, mesuré tel que décrit dans la description.
